# EUROPEAN PATENT SPECIFICATION

(11) **EP 1 904 200 B1**
(45) Date of publication and mention of the grant of the patent: **18.06.2014**
(21) Application number: 06738289.5
(22) Date of filing: 14.03.2006
(51) Int. Cl.: A63F 13/30

(54) **MOBILE TERMINALS FOR SUPPLEMENTING GAME MODULE RESOURCES AND METHODS AND COMPUTER PROGRAM PRODUCTS FOR OPERATING THE SAME**
MOBILE ENDGERÄTE ZUR ERGÄNZUNG VON SPIELMODULRESSOURCEN UND VERFAHREN UND COMPUTERPROGRAMMPRODUKTE FÜR IHREN BETRIEB
TERMINAUX MOBILES EN SUPPLEMENT DE RESSOURCES DE MODULES DE JEU ET PROCEDES ET PROGRAMMES INFORMATIQUES POUR LEUR MISE EN OEUVRE

(30) Priority: 18.07.2005 US 183422
(43) Date of publication of application: 02.04.2008
(73) Proprietor: Sony Ericsson Mobile Communications AB, 221 88 Lund (SE)
(72) Inventor: HUNTER, Wesley, K., Sanford, North Carolina 27330 (US); HERNDON, David, Bailey, North Carolina 27807 (US)
(74) Representative: Wheatley, Alison Clare
(86) International application number: PCT/US2006/009211
(87) International publication number: WO 2007/011428

(56) References cited:
- EP-A- 1 493 472
- WO-A-2004/017531
- US-A1- 2002 006 824
- US-A1- 2003 211 888
- US-A1- 2004 110 564
- US-B1- 6 623 360
- PATENT ABSTRACTS OF JAPAN vol. 2000, no. 07, 29 September 2000 (2000-09-29) -& JP 2000 115303 A (MIYAGI TAKAMI), 21 April 2000 (2000-04-21)
- PATENT ABSTRACTS OF JAPAN vol. 2000, no. 03, 30 March 2000 (2000-03-30) -& JP 11 333141 A (MITSUBISHI PENCIL CO LTD), 7 December 1999 (1999-12-07)

## Description

### BACKGROUND OF THE INVENTION

The present invention relates to mobile terminals and methods and computer program products for operating the same and, more particularly, to audio circuits, methods and computer program products for processing an audio signal of such devices.

A variety of consumer devices, including mobile devices, such as mobile terminals, include both a processor and user input/output devices, such as displays, speakers, microphones and the like. For such devices, the processor is generally configured to process different forms of media content, such as audio files, pictures, animations and the like. For mobile terminals, the processor is also generally configured to process voice and/or video content that may be associated with a phone call voice connection established to the mobile terminal or a data connection.

Another popular consumer device is a game console. In general, users of game consoles have a need to be able to save to memory and/or load into memory levels achieved, game progress, and other game related information to allow them to maintain the status of a game in progress for restarting on their own game console or for installation on another game console to run a game on a different game console. This ability to save game information is generally supported by game consoles through the use of removable memory cards that may be plugged into the game console. However, very motivated gamers would enjoy playing their favorite games anywhere and whenever an opportunity to do so arises. As a result, frequently, a game user may not have a memory card on his or her person to allow them to load or save their game data. Therefore, game users may not always be able to take advantage of the ability to save user data and game progress information.

US 6623360 discloses a game that is played in such a manner that game situation information of a game advanced by a game computation is transmitted to a player's portable telephone, and that game instruction information of the player is received from the portable telephone to advance the game according to the received game instruction information.

### SUMMARY OF THE INVENTION

In some embodiments of the present invention, mobile terminals include a portable housing and a wireless communication network interface circuit in the housing. A memory is coupled to the housing and a user interface is in the housing.

A data interface in the housing is configured to be operatively coupled to a game module and a controller in the housing is configured to couple the memory and/or the user interface of the mobile terminal to the game module through the data interface to supplement resources of the game module using the memory and/or the user interface.

In other embodiments of the present invention, the controller is configured to obtain user data associated with a game from the game module and to save the obtained user data in the memory responsive to a user request. The controller may also be configured to provide saved user data from the memory to the game module. The data interface may be, for example, a Bluetooth interface, an infrared interface and/or a data cable interface, which data cable interface may be a serial bus interface. The memory may be a removable memory.

In further embodiments of the present invention, the user interface includes a display of the mobile terminal and the controller is configured to couple the display of the mobile terminal to the game module for use by the game module in displaying supplemental game user information while continuing display of graphics associated with a game on a display of the game module. The user interface may include a user input interface and the controller may be configured to couple the user input interface to the game module to allow a user to obtain information associated with the game from the game module based on a user request input to the game module through the user input interface of the mobile terminal.

In other embodiments of the present invention, the supplemental information is inventory information associated with a character of the game, a map associated with the game, a playbook associated with the game and/or a character to character communication visual interface associated with the game. The user input interface may be a keypad of the mobile terminal and the information associated with the game may be inventory information associated with a character of the game.

In yet further embodiments of the present invention, methods of supplementing game module resources with a mobile terminal include communicatively linking the mobile terminal to the game module using a data interface of the mobile terminal. A memory and/or a user interface of the mobile terminal are utilized to supplement resources of the game module.

In other embodiments of the present invention, utilizing a memory and/or a user interface includes obtaining user data associated with a game from the game module and saving the obtained user data in the memory responsive to a user request. Saved user data may be provided from the memory to the game module.

In yet other embodiments of the present invention, the user interface includes a display of the mobile terminal and utilizing a memory and/or a user interface includes coupling the display of the mobile terminal to the game module and using the display of the mobile terminal to display supplemental game user information while continuing display of graphics associated with a game on a display of the game module. The user interface may include a user input interface and utilizing a memory and/or a user interface may include coupling the user input interface of the mobile terminal to the game module and inputting a user request to the game module through the user input interface of the mobile terminal to obtain information associated with the game from the game module.

While described above primarily with reference to apparatus and method aspects, it will be understood that the present invention also includes computer program products for supplementing game module resources with a mobile terminal.

### BRIEF DESCRIPTION OF THE DRAWINGS

Figure **1** is a schematic block diagram of a mobile terminal according to some embodiments of the present invention and an exemplary base station transceiver and gaming module.
Figure 2 is a flowchart illustrating methods for supplementing game module resources according to some embodiments of the present invention.
Figure 3 is a flowchart illustrating methods for supplementing game module resources according to some embodiments of the present invention.
Figure 4 is a flowchart illustrating methods for supplementing game module resources according to some embodiments of the present invention.

### DETAILED DESCRIPTION OF EXEMPLARY EMBODIMENTS

Specific exemplary embodiments of the invention now will be described with reference to the accompanying drawings. This invention may, however, be embodied in many different forms and should not be construed as limited to the embodiments set forth herein; rather, these embodiments are provided so that this disclosure will be thorough and complete, and will fully convey the scope of the invention to those skilled in the art. The terminology used in the detailed description of the particular exemplary embodiments illustrated in the accompanying drawings is not intended to be limiting of the invention. In the drawings, like numbers refer to like elements.

As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof. It will be understood that when an element is referred to as being "connected" or "coupled" to another element, it can be directly connected or coupled to the other element or intervening elements may be present. Furthermore, "connected" or "coupled" as used herein may include wirelessly connected or coupled. As used herein, the term "and/or" includes any and all combinations of one or more of the associated listed items.

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

As used herein, a "mobile terminal" includes both devices having only a wireless signal receiver without transmit abilities and devices having both receive and transmit hardware capable of two-way communication over a two-way communication link. Such devices may include cellular or other communications devices with or without a multi-line display; Personal Communications System (PCS) terminals that may combine a voice and data processing, facsimile and/or data communications capabilities; Personal Digital Assistants (PDA) that can include a radio frequency receiver and a pager, Internet/Intranet access, Web browser, organizer, calendar and/or a global positioning system (GPS) receiver; and/or conventional laptop and/or palmtop computers or other appliances, which include a radio frequency receiver. As used herein, "mobile terminals" may be portable, transportable, installed in a vehicle (aeronautical, maritime, or land-based), or situated and/or configured to operate locally and/or in a distributed fashion at any other location(s) on earth and/or in space. As used herein, a "mobile device" includes mobile terminals as well as mobile devices that do not support wireless communications.

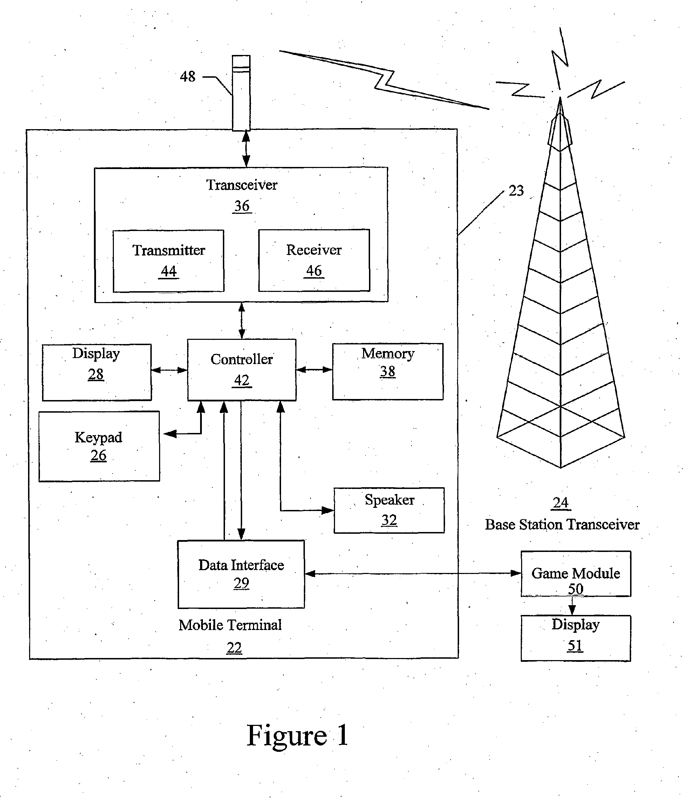

Embodiments of the present invention will now be described below with respect to **Figures 1** through **4****.** Referring first to **Figure 1**, a schematic block circuit diagram is provided illustrating a mobile terminal including a data interface to a gaming module in accordance with some embodiments of the present invention. **Figure 1** illustrates a mobile terminal **22** and a base station transceiver **24** of a wireless communications network. The mobile terminal **22** includes a portable housing **23** and may include, a keyboard **26,** a display **28,** a speaker **32,** a microphone **34,** a transceiver **36,** and a memory **38,** any of which may communicate with a controller (processor) **42**. Furthermore, the mobile terminal **22** includes a data interface **29**, which also communicates with the processor **42.** The processor **42** can be any commercially available or custom microprocessor.

The data interface **29** is configured to be operatively coupled to a game module 50. For example, the data interface **29** may be a data cable, an infrared (IR) port and/or a Bluetooth transmitter circuit that may be used to transmit user data and game progress information from the game module **50** to the mobile terminal **22** for storage thereof by the controller **42** in the memory **38**. The data cable may be, for example, a serial bus interface, such as a Universal Serial Bus (USB) interface. Furthermore, where the game module **50** includes an interface that may be communicatively coupled to the base station transceiver **24,** the data interface **29** may be provided by the transceiver 36 and need not be a separate interface circuit as illustrated schematically in **Figure 1****.**

The transceiver **36** typically includes a transmitter circuit **44** and a receiver circuit **46,** which respectively transmit outgoing radio frequency signals to the base station transceiver **24** and receive incoming radio frequency signals, such as voice call and data signals, from the base station transceiver **24** via an antenna **48.** The antenna **48** may be an embedded antenna, a retractable antenna or any antenna known to those having skill in the art without departing from the scope of the present invention. The radio frequency signals transmitted between the mobile terminal **22** and the base station transceiver **24** may include both traffic and control signals (*e.g*., paging signals/messages for incoming calls), which are used to establish and maintain a voice call communication with another party or to transmit and/or receive data, such as e-mail or MMS messages, with a remote device. The processor **42** may support various functions of the mobile terminal **22**, including functions related to the audio signal processing circuit **29** of the mobile terminal **22** according to some embodiments of the present invention.

In some embodiments of the present invention, the base station transceiver **24** is a radio transceiver(s) that defines a cell in a cellular network and communicates with the mobile terminal **22** and other mobile terminals in the cell using a radio-link protocol. Although only a single base station transceiver **24** is shown, it will be understood that many base station transceivers may be connected through, for example, a mobile switching center and other devices, to define a wireless communications network.

In various embodiments of the present invention, the controller **42** is configured to couple the memory **38** and/or one of the user interface devices, such as the display **28** or the keypad **26,** to the game module **50** through the data interface **29**. More particularly, the controller **42** is configured to allow use of the data interface **29** to supplement resources of the game module **50** using the memory **38,** display **28** and/or keypad **26** of the mobile terminal **22.** As such, on occasions when a user of a game module **50** does not have a memory card on hand, but has their mobile terminal **22** available, the user of the game module **50** may save their progress/status for a game underway on the game module **50** on their mobile **terminal 22.** This ability may be particularly advantageous as a user of the game module **50** may be more likely to be carrying the mobile terminal **22** on their person more often than a memory card. Such an ability to save a game user's progress information to a mobile phone to support gaming may provide an added advantageous capability to the mobile phone by providing convenience to a user who is likely to have the mobile phone on their person at most times.

Where the memory **38** of the mobile terminal **22** is utilized by the game module **50,** in certain embodiments of the present invention, the user game data could be transmitted through the data interface **29** and stored internally, using non-volatile memory. It may also be stored externally, using a removable memory card or the like, depending upon the types of memory **38** available to the mobile terminal **22.**

In addition to use of the memory **38** to supplement the game module **50,** multimedia and connectivity features of various mobile terminals **22** may allow for additional supplementation of game module resources in manners other than the usage of memory to save user game progress data and the like. For example, in addition to or as an option to saving game data on the mobile terminal **22,** the data interface **29** may be utilized by the controller **42** to allow the mobile terminal **22** to be used as a "gaming companion." For example, using the mobile terminal's multimedia ability, the mobile terminal **22** could be used as part of the game.

One example of such a multimedia usage would be in connection with a game having game characters with an associated inventory. In such instances, the mobile terminal **22** could be the game player interface to the inventory of a game character. By way of further example, for a first person shooter game, a level map as well as a current location of a character could be displayed on the display **28** of the mobile terminal **22.** By way of yet further example, in a sports game, an associated play book and current play selection could be displayed on the display **28** of the mobile terminal **22** in a manner that would allow it to be kept secret from an opponent. By way of further example, various military-style games have game characters that communicate character to character through a visual interface, which typically stops game play on a game module **50.** This communication visual interface could instead be displayed on the display **28** of the mobile terminal **22,** which may eliminate the need for a pause in action. Thus, in various embodiments of the present invention, using the mobile terminal **22** as a resource for game maps, inventory and the like may allow for a better, more continuous game experience, without the need for diverting into the display of menus and the like on a display **51** of the game module 50 that may interrupt game play.

As described above, in various embodiments of the present invention, user and game progress data from the game module **50** may be uploaded through the interface **29** and stored in the memory **38** by the controller **42.** Similarly, user and game data progress from the memory **38** may be downloaded through the data interface **29** to the game module **50** to allow a user to resume play, for example, at a stop point of a game in progress.

In addition, a user input interface, such as a keypad **26,** may be coupled by the controller **42** through the data interface **29** to the game module **50** to allow a user to obtain information associated with a game from the game module **50** based on a user request input to the game module **50** through the keypad **26** or other user input interface with the mobile terminal **22.** As described in various examples above, the display **28** of the mobile terminal **22** may also be coupled by the controller **42** through the data interface **29** to the game module **50** to allow display of supplemental game user information while continuing display of graphics associated with the game on the display **51** of the game module **50.** The supplemental information for display (or that is obtained from the game module **50** responsive to user request) may include inventory information associated with the character of the game, maps associated with the game, a play book associated with the game, and/or a character to character communication visual interface associated with the game as discussed above.

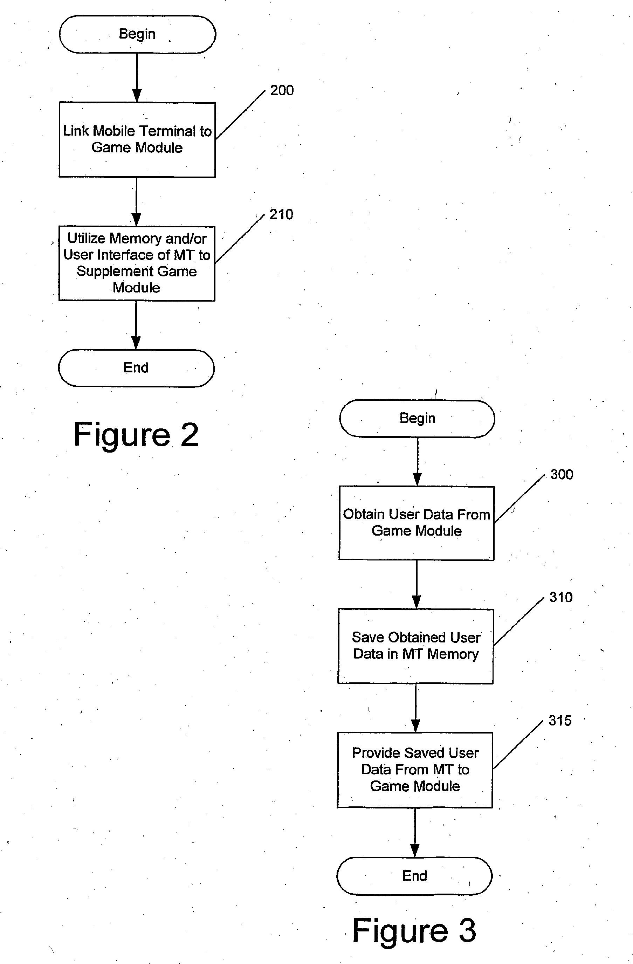

Methods for supplementing game module resources with a mobile terminal according to various embodiments of the present invention will now be described with reference to the flow chart illustration of **Figures 2-4****.** As seen in **Figure 2****,** operations begin at Block **200** by communicatively linking the mobile terminal **22** to the game module using the data interface **29** of the mobile terminal **22.** A memory **38** and/or user interface **26, 28** of the mobile terminal **22** are utilized to supplement resources of the game module (Block **210).**

Further embodiments of the present invention will now be described with reference to the flow chart illustration of **Figure 3****,** which illustrates various operations for some embodiments of the present invention corresponding to Block **210** of **Figure 2****.** As shown in the embodiments of **Figure 3****,** user data associated with a game is obtained from the game module (Block **300).** The obtained user data is saved in the memory of the mobile terminal responsive to the user request (Block **310)**. The saved user data may be provided from the memory back to the game module (Block **315).**

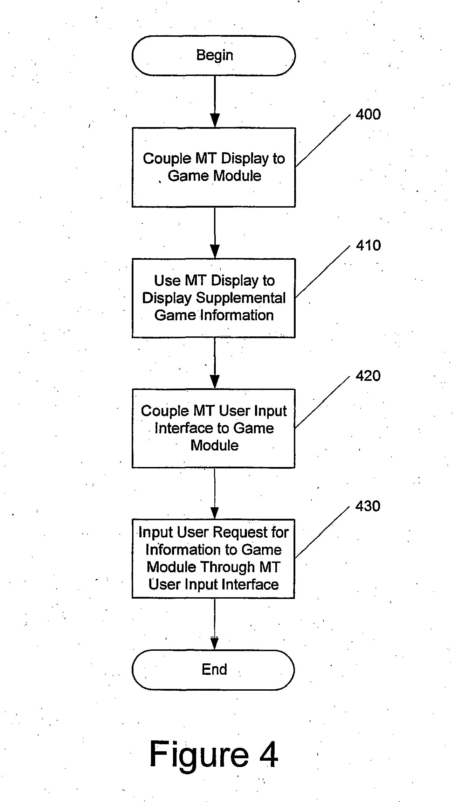

Yet further embodiments of operations for utilizing mobile terminal resources to supplement game module resources will now be described with reference to the flowchart illustration of **Figure 4****.** As shown in the embodiments of **Figure 4****,** a display of the mobile terminal is coupled to the game module (Block **400).** The display of the mobile terminal is used to display supplemental game user information while continuing display of graphics associated with the game on a display of the game module (Block **410).** Also shown in the embodiments of **Figure 4** is the use of a user input interface of the mobile terminal that is coupled to the game module (Block **420)**. A user request is input to the game module through the user input interface, such as a keypad, of the mobile terminal to obtain information associated with the game from the game module (Block **430).** For example, game character inventory information could be obtained by user request through a keypad **26** of the mobile terminal **22** and displayed for a user on the display **28** of the mobile terminal **22**.

As will be appreciated by one of skill in the art, the present invention may be embodied as a method, system, or computer program product. Accordingly, the present invention may take the form of an entirely hardware embodiment, a software embodiment or an embodiment combining software and hardware aspects all generally referred to herein as a "circuit" or "module." Furthermore, the present invention may take the form of a computer program product on a computer-usable storage medium having computer-usable program code embodied in the medium. Any suitable computer readable medium may be utilized including hard disks, CD-ROMs, optical storage devices, a transmission media such as those supporting the Internet or an intranet, or magnetic storage devices.

Computer program code for carrying out operations of the present invention may be written in an object oriented programming language such as Java®, Smalltalk or C++. However, the computer program code for carrying out operations of the present invention may also be written in conventional procedural programming languages, such as the "C" programming language and/or a lower level assembler language. The program code may execute entirely on the user's computer, partly on the user's computer, as a stand-alone software package, partly on the user's computer and partly on a remote computer or entirely on the remote computer. In the latter scenario, the remote computer may be connected to the user's computer through a local area network (LAN) or a wide area network (WAN), or the connection may be made to an external computer (for example, through the Internet using an Internet Service Provider).

Furthermore, the present invention was described in part above with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer-readable memory produce an article of manufacture including instruction means which implement the function/act specified in the flowchart and/or block diagram block or blocks.

The computer program instructions may also be loaded onto a computer or other programmable data processing apparatus to cause a series of operational steps to be performed on the computer or other programmable apparatus to produce a computer implemented process such that the instructions which execute on the computer or other programmable apparatus provide steps for implementing the functions/acts specified in the flowchart and/or block diagram block or blocks.

The diagrams of **Figures 2** through **4** illustrate the architecture, functionality, and operations of some embodiments of methods, systems, and computer program products for supplementing game resources using a mobile terminal. In this regard, each block may represent a module, segment, or portion of code, which comprises one or more executable instructions for implementing the specified logical function(s). It should also be noted that in other implementations, the function(s) noted in the blocks may occur out of the order noted in the figures. For example, two blocks shown in succession may, in fact, be executed substantially concurrently or the blocks may sometimes be executed in the reverse order, depending on the functionality involved.

In the drawings and specification, there have been disclosed exemplary embodiments of the invention. Although specific terms are employed, they are used in a generic and descriptive sense only and not for purposes of limitation, the scope of the invention being defined by the following claims.

## Claims

1. A mobile terminal (22), comprising:
a portable housing (23);
a wireless communication network interface circuit in the housing;
a memory (38) coupled to the housing (23);
a user interface (26, 28) in the housing (23), wherein the user interface comprises a display (28) of the mobile terminal (22);
a data interface (29) in the housing (23) configured to be operatively coupled to a game module (50); and
a controller (42) in the housing (23) configured to couple the memory (38) and/or the user interface (26, 28) of the mobile terminal (22) to the game module (50) through the data interface (29) to supplement resources of the game module (50) using the memory (38) and/or the user interface (26, 28), wherein the controller (42) is configured to couple the display (28) of the mobile terminal (22) to the game module for use by the game module (50) in displaying supplemental game user information while continuing display of graphics associated with a game on a display (51) of the game module (50), wherein the supplemental information comprises inventory information associated with a character of the game, a map associated with the game, a playbook associated with the game and/or a character to character communication visual interface associated with the game.

2. The mobile terminal (22) of Claim 1, wherein the controller (42) is configured to obtain user data associated with a game from the game module (50) and to save the obtained user data in the memory (38) responsive to a user request.

3. The mobile terminal (22) of Claim 1, wherein the controller (42) is configured to provide saved user data from the memory (38) to the game module (50).

4. The mobile terminal (22) of Claim 2, wherein the data interface (29) comprises a Bluetooth interface, an infrared interface and/or a data cable interface.

5. The mobile terminal (22) of Claim 4, wherein the data cable interface comprises a serial bus interface.

6. The mobile terminal (22) of Claim 2, wherein the memory (38) comprises a removable memory.

7. The mobile terminal (22) of Claim 2, wherein the user interface (26, 28) further comprises a user input interface (26) and wherein the controller (42) is configured to couple the user input interface (26) to the game module (50) to allow a user to obtain information associated with the game from the game module (50) based on a user request input to the game module (50) through the user input interface (26) of the mobile terminal (22).

8. The mobile terminal (22) of Claim 1, wherein the user interface (26, 28) further comprises a user input interface (26) and wherein the controller (42) is configured to couple the user input interface (26) to the game module (500 to allow a user to obtain information associated with the game from the game module (50) based on a user request input to the game module (50) through the user input interface (26) of the mobile terminal (22).

9. The mobile terminal (22) of Claim 1, wherein the user interface (26, 28) comprises a user input interface (26) and wherein the controller (42) is configured to couple the user input interface (26) to the game module (50) to allow a user to obtain information associated with the game from the game module (50) based on a user request input to the game module (500 through the user input interface (26) of the mobile terminal (22).

10. The mobile terminal (22) of Claim 9, wherein the user input interface (26) comprises a keypad of the mobile terminal (22) and wherein the information associated with the game is inventory information associated with a character of the game.

11. A method of supplementing game module resources with a mobile terminal (22), the method comprising:
communicatively linking (200) the mobile terminal (22) to the game module (50) using a data interface (29) of the mobile terminal (22); and
utilizing (210) a memory (38) and/or a user interface (26, 28) of the mobile terminal (22) to supplement resources of the game module (50), wherein the user interface (26, 28) comprises a display (28) of the mobile terminal (22) and wherein utilizing (210) a memory (38) and/or a user interface (26, 28) includes:
coupling (400) the display (28) of the mobile terminal (22) to the game module (50); and
using (410) the display (28) of the mobile terminal (22) to display supplemental game user information while continuing display of graphics associated with a game on a display
of the game module (50), wherein the supplemental information comprises inventory information associated with a character of the game, a map associated with the game, a playbook associated with the game and/or a character to character communication visual interface associated with the game.

12. The method of Claim 11, wherein utilizing (210) a memory (38) and/or a user interface (26, 28) comprises:
obtaining user data associated with a game from the game module (50); and
saving the obtained user data in the memory (38) responsive to a user request.

13. The method of Claim 12 further comprising providing saved user data from the memory (38) to the game module (50).

14. The method of Claim 11, wherein the user interface (26, 28) comprises a user input interface (26) and wherein utilizing (210) a memory (38) and/or a user interface (26, 28) comprises:
coupling (420) the user input interface (26, 28) of the mobile terminal (22) to the game module (50); and
inputting (430) a user request to the game module (50) through the user input interface (26) of the mobile terminal (22) to obtain information associated with the game from the game module (50).

15. A computer program product for supplementing game module resources with a mobile terminal, the computer program product comprising computer program code embodied in a computer readable medium, the computer program code comprising program code configured to carry out the method of any one of Claim 12 to 14.

## Patentansprüche

1. Mobiles Endgerät (22), umfassend:
ein tragbares Gehäuse (23);
eine Schnittstellenschaltung für ein drahtloses Kommunikationsnetzwerk in dem Gehäuse;
einen mit dem Gehäuse (23) verbundenen Speicher (38);
eine Benutzerschnittstelle (26, 28) in dem Gehäuse (23), wobei die Benutzerschnittstelle eine Anzeige (28) des mobilen Endgeräts (22) umfasst:
eine Datenschnittstelle (29) in dem Gehäuse (23), die dafür konfiguriert ist, dass sie funktionell mit einem Spielmodul (50) verbunden wird; und
einen Controller (42) in dem Gehäuse (23), der dafür konfiguriert ist, den Speicher (38) und/oder die Benutzerschnittstelle (26, 28) des mobilen Endgeräts (22) mit dem Spielmodul (50) über die Datenschnittstelle (29) zu koppeln, um Ressourcen des Spielmoduls (50) mit Hilfe des Speichers (38) und/oder der Benutzerschnittstelle (26, 28) zu unterstützen, wobei der Controller (42) dafür konfiguriert ist, die Anzeige (28) des mobilen Endgeräts (22) mit dem Spielmodul zu koppeln, damit das Spielmodul (50) zusätzliche Spiel-Benutzerinformation anzeigen kann, während die Anzeige der Graphik, die zu einem Spiel auf einer Anzeige (51) des Spielmoduls (50) gehört, weitergeht, und die Zusatzinformation Inventarinformation umfasst, die zu einer Figur des Spiels gehört, eine Landkarte, die zu dem Spiel gehört, ein Spielbuch, das zu dem Spiel gehört, und/oder eine sichtbare Schnittstelle für die Kommunikation von Figur zu Figur, die zu dem Spiel gehört.

2. Mobiles Endgerät (22) nach Anspruch 1, wobei der Controller (42) dafür konfiguriert ist, als Reaktion auf eine Benutzeranforderung die einem Spiel zugeordneten Benutzerdaten von dem Spielmodul (50) zu erhalten und die erhaltenen Benutzerdaten im Speicher (38) abzulegen.

3. Mobiles Endgerät (22) nach Anspruch 1, wobei der Controller (42) dafür konfiguriert ist, dem Spielmodul (50) gesicherte Benutzerdaten aus dem Speicher (38) zu liefern.

4. Mobiles Endgerät (22) nach Anspruch 2, wobei die Datenschnittstelle (29) eine Bluetooth-Schnittstelle, eine Infrarotschnittstelle und/oder eine Datenkabel-Schnittstelle umfasst.

5. Mobiles Endgerät (22) nach Anspruch 4, wobei die Datenkabel-Schnittstelle eine serielle Busschnittstelle umfasst.

6. Mobiles Endgerät (22) nach Anspruch 2, wobei der Speicher (38) einen herausnehmbaren Speicher umfasst.

7. Mobiles Endgerät (22) nach Anspruch 2, wobei die Benutzerschnittstelle (26, 28) zudem eine Benutzereingabe-Schnittstelle (26) umfasst, und wobei der Controller (42) dafür konfiguriert ist, die Benutzereingabe-Schnittstelle (26) mit dem Spielmodul (50) zu koppeln, damit ein Benutzer von dem Spielmodul (50) zum Spiel gehörende Information erlangen kann, und zwar auf eine Benutzeranforderung hin, die über die Benutzereingabe-Schnittstelle (26) des mobilen Endgeräts (22) in das Spielmodul (50) eingegeben wird.

8. Mobiles Endgerät (22) nach Anspruch 1, wobei die Benutzerschnittstelle (26, 28) zudem eine Benutzereingabe-Schnittstelle (26) umfasst, und wobei der Controller (42) dafür konfiguriert ist, die Benutzereingabe-Schnittstelle (26) mit dem Spielmodul (50) zu koppeln, damit ein Benutzer von dem Spielmodul (50) zum Spiel gehörende Information erlangen kann, und zwar auf eine Benutzeranforderung hin, die über die Benutzereingabe-Schnittstelle (26) des mobilen Endgeräts (22) in das Spielmodul (50) eingegeben wird.

9. Mobiles Endgerät (22) nach Anspruch 1, wobei die Benutzerschnittstelle (26, 28) eine Benutzereingabe-Schnittstelle (26) umfasst, und wobei der Controller (42) dafür konfiguriert ist, die Benutzereingabe-Schnittstelle (26) mit dem Spielmodul (50) zu koppeln, damit ein Benutzer von dem Spielmodul (50) zum Spiel gehörende Information erlangen kann, und zwar auf eine Benutzeranforderung hin, die über die Benutzereingabe-Schnittstelle (26) des mobilen Endgeräts (22) in das Spielmodul (50) eingegeben wird.

10. Mobiles Endgerät (22) nach Anspruch 9, wobei die Benutzereingabe-Schnittstelle (26) eine Tastatur des mobilen Endgeräts (22) umfasst, und wobei die zum Spiel gehörende Information die Inventarinformation ist, die zu einer Figur des Spiels gehört.

11. Verfahren zum Ergänzen von Spielmodulressourcen mit einem mobilen Endgerät (22), umfassend:
das kommunikative Verbinden (200) des mobilen Endgeräts (22) mit dem Spielmodul (50) mit Hilfe einer Datenschnittstelle (29) des mobilen Endgeräts (22); und
das Verwenden (210) eines Speichers (38) und/oder einer Benutzerschnittstelle (26, 28) des mobilen Endgeräts (22) zum Ergänzen der Ressourcen des Spielmoduls (50), wobei die Benutzerschnittstelle (26, 28) eine Anzeige (28) des mobilen Endgeräts (22) umfasst, und wobei das Verwenden (210) eines Speichers (38) und/oder einer Benutzerschnittstelle (26, 28) enthält:
das Koppeln (400) der Anzeige (28) des mobilen Endgeräts (22) mit dem Spielmodul (50); und
das Verwenden (410) der Anzeige (28) des mobilen Endgeräts (22) zum Anzeigen ergänzender Spielbenutzerinformation, während die Anzeige der Graphik, die zu einem Spiel auf einer Anzeige des Spielmoduls (50) gehört, weitergeht, und die Zusatzinformation Inventarinformation umfasst, die zu einer Figur des Spiels gehört, eine Landkarte, die zu dem Spiel gehört, ein Spielbuch, das zu dem Spiel gehört, und/oder eine sichtbare Schnittstelle für die Kommunikation von Figur zu Figur, die zu dem Spiel gehört.

12. Verfahren nach Anspruch 11, wobei das Verwenden (210) eines Speichers (38) und/oder einer Benutzerschnittstelle (26, 28) umfasst:
das Erhalten von Benutzerdaten, die zu einem Spiel gehören, von dem Spielmodul (50); und
das Sichern der erhaltenen Benutzerdaten im Speicher (38) als Reaktion auf eine Benutzeranforderung.

13. Verfahren nach Anspruch 12, ferner umfassend das Liefern von gesicherten Benutzerdaten vom Speicher (38) an das Spielmodul (50).

14. Verfahren nach Anspruch 11, wobei die Benutzerschnittstelle (26, 28) eine Benutzereingabe-Schnittstelle (26) umfasst, und wobei das Verwenden (210) eines Speichers (38) und/oder einer Benutzerschnittstelle (26, 28) umfasst:
das Koppeln (420) der Benutzerschnittstelle (26, 28) des mobilen Endgeräts (22) mit dem Spielmodul (50); und
das Eingeben (430) einer Benutzeranforderung in das Spielmodul (50) über die Benutzereingabe-Schnittstelle (26) des mobilen Endgeräts (22), damit Information über das Spiel vom Spielmodul (50) erhalten wird.

15. Computerprogrammprodukt zum Ergänzen von Spielmodulressourcen mit einem mobilen Endgerät, wobei das Computerprogrammprodukt Computerprogrammcode umfasst, der in einem computerlesbaren Medium verkörpert ist, und der Computerprogrammcode Programmcode umfasst, der dafür konfiguriert ist, das Verfahren nach irgendeinem der Ansprüche 12 bis 14 auszuführen.

## Revendications

1. Terminal mobile (22), comprenant :
un boîtier portable (23) ;
un circuit d'interface de réseau de communication sans fil dans le boîtier ;
une mémoire (38) couplée au boîtier (23) ;
une interface utilisateur (26, 28) dans le boîtier (23), où l'interface utilisateur comprend un affichage (28) du terminal mobile (22) ;
une interface de données (29) dans le boîtier (23) configurée pour être fonctionnellement couplée à un module de jeu (50) ; et
un dispositif de commande (42) dans le boîtier (23) configuré pour coupler la mémoire (38) et/ou l'interface utilisateur (26, 28) du terminal mobile (22) au module de jeu (50) par l'interface de données (29) pour supplémenter les ressources du module de jeu (50) en utilisant la mémoire (38) et/ou l'interface utilisateur (26, 28), où le dispositif de commande (42) est configuré pour coupler l'affichage (28) du terminal mobile (22) au module de jeu pour l'utilisation par le module de jeu (50) pour afficher des informations de jeu supplémentaires pour l'utilisateur tout en continuant l'affichage de graphiques associés à un jeu sur un écran d'affichage (52) du module de jeu (50), où les informations supplémentaires comprennent des informations d'inventaire associées au caractère du jeu, une carte associée au jeu, un livret associé au jeu et/ou une interface visuelle de communication de caractères associée au jeu.

2. Terminal mobile (22) selon la revendication 1, dans lequel le dispositif de commande (42) est configuré pour obtenir des données d'utilisateur associées à un jeu d'un module de jeu (50) et pour sauvegarder les données d'utilisateur obtenues dans la mémoire (38) en réponse à une requête de l'utilisateur.

3. Terminal mobile (22) selon la revendication 1, dans lequel le dispositif de commande (42) est configuré pour fournir des données d'utilisateur sauvegardées de la mémoire (38) au module de jeu (50).

4. Terminal mobile (22) selon la revendication 2, dans lequel l'interface de données (29) comprend une interface Bluetooth, une interface infrarouge et/ou une interface de câble de données.

5. Terminal mobile (22) selon la revendication 4, dans lequel l'interface de câble de données comprend une interface par bus série.

6. Terminal mobile (22) selon la revendication 2, dans lequel la mémoire (38) comprend une mémoire amovible.

7. Terminal mobile (22) selon la revendication 2, dans lequel l'interface utilisateur (26, 28) comprend en outre une interface d'entrée utilisateur (26) et où le dispositif de commande (42) est configuré pour coupler l'interface d'entrée utilisateur (26) au module de jeu (50) pour permettre à un utilisateur d'obtenir des informations associées au jeu du module de jeu (50) sur la base d'une entrée de requête par l'utilisateur au module de jeu (50) par l'interface d'entrée utilisateur (26) du terminal mobile (22).

8. Terminal mobile (22) selon la revendication 1, dans lequel l'interface utilisateur (26, 28) comprend en outre une interface d'entrée utilisateur (26) et où le dispositif de commande (42) est configuré pour coupler l'interface d'entrée utilisateur (26) au module de jeu (50) pour permettre à un utilisateur d'obtenir des informations associées au jeu du module de jeu (50) sur la base d'une entrée de requête par l'utilisateur dans le module de jeu (50) par l'interface d'entrée utilisateur (26) du terminal mobile (22).

9. Terminal mobile (22) selon la revendication 1, dans lequel l'interface utilisateur (26, 28) comprend une interface d'entrée utilisateur (26), et où le dispositif de commande (42) est configuré pour coupler l'interface d'entrée utilisateur (26) au module de jeu (50) pour permettre à un utilisateur d'obtenir des informations associées au jeu du module de jeu (50) sur la base d'une entrée de requête par l'utilisateur dans la module de jeu (50) par l'interface d'entrée utilisateur (26) du terminal mobile (22).

10. Terminal mobile (22) selon la revendication 9, dans lequel l'interface d'entrée utilisateur (26) comprend un clavier du terminal mobile (22), et où les informations associées au jeu sont des informations d'inventaire associées au caractère du jeu.

11. Procédé pour supplémenter des ressources d'un module de jeu avec un terminal mobile (22), le procédé comprenant :
lier de manière communicative (200) le terminal mobile (22) au module de jeu (50) en utilisant une interface de données (29) du terminal mobile (22) ; et
utiliser (210) une mémoire (38) et/ou une interface utilisateur (26, 28) du terminal mobile (22) pour supplémenter les ressources du module de jeu (50), où l'interface utilisateur (26, 28) comprend un écran d'affichage (28) du terminal mobile (22), et où l'utilisation (210) d'une mémoire (38) et/ou d'une interface utilisateur (26, 28) comprend :
coupler (400) l'écran d'affichage (28) du terminal mobile (22) au module de jeu (50) ; et
utiliser (410) l'écran d'affichage (28) du terminal mobile (22) pour afficher des informations de jeu supplémentaires pour l'utilisateur tout en continuant l'affichage de graphiques associés à un jeu sur un écran d'affichage du module de jeu (50), où les informations supplémentaires comprennent des informations d'inventaire associées à un caractère du jeu, une carte associée au jeu, un livret associé au jeu et/ou une interface visuelle de communication de caractère à caractère associée au jeu.

12. Procédé selon la revendication 11, dans lequel l'utilisation (210) d'une mémoire (38) et/ou d'une interface utilisateur (26, 28) comprend :
obtenir des données d'utilisateur associées au jeu du module de jeu (50) ; et
sauvegarder les données d'utilisateur obtenues dans la mémoire (38) en réponse à une requête de l'utilisateur.

13. Procédé selon la revendication 12, comprenant en outre la fourniture de données d'utilisateur sauvegardées de la mémoire (38) au module de jeu (50).

14. Procédé selon la revendication 11, dans lequel l'interface utilisateur (26, 28) comprend une interface d'entrée utilisateur (26), et où l'utilisation (210) d'une mémoire (38) et/ou d'une interface utilisateur (26, 28) comprend :
coupler (420) l'interface d'entrée utilisateur (26, 28) du terminal mobile (22) au module de jeu (50) ; et
entrer (430) une requête formulée par l'utilisateur dans le module de jeu (50) par l'interface d'entrée utilisateur (26) du terminal mobile (22) pour obtenir des informations associées au jeu du module de jeu (50).

15. Produit de programme d'ordinateur pour supplémenter des ressources de module de jeu avec un terminal mobile, le produit de programme d'ordinateur comprenant un code programme d'ordinateur incorporé dans un support lisible par ordinateur, le code programme d'ordinateur comprenant un code programme configuré pour exécuter le procédé selon l'une quelconque des revendications 12 à 14.
